# EUROPEAN PATENT APPLICATION

(11) **EP 4 407 833 A1**
(43) Date of publication of application: **31.07.2024**
(21) Application number: 24154471.7
(22) Date of filing: 29.01.2024
(51) Int. Cl.: H02J 7/00, B60L 3/04, H02H 7/18

(54) **A PROTECTIVE CIRCUIT FOR A BATTERY PACK**

(30) Priority: 30.01.2023 IN 202341005755
(71) Applicant: TVS Motor Company Limited, 600006 Chennai (IN)
(72) Inventor: Kumar, Duru Johnish, 600006 Chennai (IN); Rao, Upender, 600006 Chennai (IN); Sagare, Datta Rajaram, 600006 Chennai (IN)
(74) Representative: Patentanwaltskanzlei Matschnig & Forsthuber OG

(57) **Abstract**

The present subject matter relates to a protective circuit (200) for a battery pack (102) . According to aspects illustrated herein, the battery pack (102) includes a of a plurality of cells. A protective circuit (200) for a battery pack (102) is disclosed. The protective circuit includes a plurality of switches (202-1, 202-2) that are connected in parallel with the battery pack. The plurality of switches (202-1, 202-2) may be controlled by a motor control unit, MCU (112) and, at least one fusing unit 106 is connected to the plurality of switches (202-1, 202-2) in series. The MCU (112) is configured to actuate the fusing unit (106) based on detection of a state of operation of any or a combination of the plurality of switches (202-1, 202-2).

## Description

### FIELD OF THE INVENTION

The present subject matter is related, in general to a battery pack, and more particularly, but not exclusively to a battery pack with a protective circuit to protect the battery pack from unintentional currents.

### BACKGROUND OF THE INVENTION

The current situation presents a significant dependency on battery packs for the functioning of electrical and electronic components. Further, in the pursuit of curbing greenhouse emissions, a significant demand has been put upon the technological development of rechargeable battery packs for the purpose of utility in electric and plug-in hybrid vehicles. The application of rechargeable battery packs involving high power applications raises critical concerns regarding safe and secure operation of the battery pack. Consequently, intense research and development persists in the field of battery pack development which deals with detection and diagnosis of miscellaneous or abnormal functioning of the battery pack.

A battery pack is an electrical energy storage device configured to supply the stored electrical energy to an external load as and when demanded by the external load. The battery pack employ a plurality of battery cells which are connected either in a series configuration or in a parallel configuration. The connection between the plurality of battery cells is secured through one or more interconnectors which provide an electrical connection.

The phenomenon of thermal runaway occurring in battery packs lead to propagation of fire from the battery pack to the adjacent operational environment of the battery pack causing catastrophic accidents. Thermal runaway is an accelerated release of heat inside the battery cells due to uncontrolled exothermic reactions. In the event of uncontrolled exothermic reactions occurring in the battery pack, the battery cell is no longer capable of dissipating the heat as quickly as it is generated which leads to thermal instability of the battery cell and consequently the battery pack.

Further, recent regulatory norms with reference to safety of battery packs requires battery packs to be equipped with active paralleling circuits for battery packs having parallel connection of cells and strings. The aforementioned regulatory norm enables isolation of faulty cells and strings in the battery pack in order to eliminate the circulating currents.

In the pursuit of detection and diagnosis of miscellaneous functioning of the battery pack, the battery pack is provided with a battery management system (hereinafter referred to as BMS). The BMS monitors the health of the battery pack through battery parameters such as voltage, charging current, temperature and state of charge of the battery cells. Typically, the miscellaneous functionality of the battery pack is manifested in the form of an abnormal rise in temperature in the battery pack. The BMS upon sensing the abnormal temperature rise, ceases the functioning of the entire battery pack in coping with the possibility of thermal runaway occurring in the battery pack.

In vehicle configuration, the battery packs are usually paralleled so that when there is an issue in one battery pack, the other one is configured to function. switches are typically used for open circuiting in the event of detected anomaly. switches can potentially fail by two different modes. A switch can fail open or a switch can get fail shorted. However, in cases of fail shorting of switches, entire control over the battery pack is lost which may lead to catastrophic failures and dire safety concerns. In this event the cell voltages flare and as the switch isn't being operated by the BMS and there are chances of occurrence of a thermal runaway. Thermal runways are addressed in the art with use of fuses in series with switch, use of pyro fuses with switch or use of relays with switch.

In a conventional battery system, the battery pack is provided with a BMS. The basic function of the BMS is to have control over the current from the battery to the vehicle/ external load and based on any detected anomaly in the battery pack, the BMS is configured to stop the flow of the current to the vehicle/external load.

Typically, the BMS employs a switch to stop the flow of the current to the vehicle/external load detection of an anomaly in the battery pack. In case of an issue detected on the vehicle/external load side, the current flowing back is blocked by switches.

In the event of failure of the switch to operate - where the MCU sends the command to open circuit (through switch) because of unintentional currents but the switch fails to execute the same - then the fuse is configured to blow-off so as to protect the battery pack and BMS. The fuse only functions when the current is beyond a certain threshold. There is a possibility of unintentional currents circulating in the battery pack which are within normal current levels/values but they undesirably drain the battery pack.

Even with current being within prescribed levels there are chances of occurrence of thermal runaway and control over the battery pack is lost with shorting in switches. In this scenario the cell voltages flare and the fuse is deemed useless. Pyro fuses employ a signal-based fusing methods where upon receipt of a signal from the MCU, the pyro fuse blows up automatically.

The drawback of using pyro fuses is that an additional cost of operation and service owing to use of pyro fuses is incurred. And since the pyro fuse is positioned external to the BMS, more components and additional wiring would be required to gain control over the pyro fuse. This would additionally lead to more components, increased wiring length, packaging issues and cost.

Further, as battery packs operate at very high currents (such as 400A) getting pyro fuse with such high rating is difficult and would require multiple pyro fuse to be connected in parallel which would further increase cost. Relays often lead to sparking and leads to sparking of the joint where fail short condition of the switch occurs. The fuse is a secondary protection in the event of failure of the switch. An additional drawback of this solution is the replacement of the entire fuse or battery pack for resumption of normal functioning. Therefore, there is a need to provide an effective solution to ensure failure modes of switches that are controlled by the BMS and to ensure that unintentional currents flowing within the battery pack do not damage the battery pack while at the same time is cost-effective and eliminates the requirement of having to replace the battery pack in case of a fuse due to failure of a switch.

Further limitations and disadvantages of conventional and traditional approaches will become apparent to one of skill in the art, through comparison of described systems with some aspects of the present disclosure, as set forth in the remainder of the present application and with reference to the drawings.

### SUMMARY

The foregoing summary is illustrative only and is not intended to be in any way limiting. In addition to the illustrative aspects, embodiments, and features described above, further aspects, embodiments, and features will become apparent by reference to the drawings and the following detailed description. The present invention discloses a cost-effective solution in the form of a protection circuit which addresses the exact drawback of the above-mentioned prior arts.

The present invention addresses safety concerns in the battery pack and appositely provides a protection circuit which addresses the failure mode of the switches controlled by BMS in the event of unintentional currents flowing in the battery pack. The protection circuit comprising of a plurality of switches is operated by a control algorithm of the MCU.

According to aspects illustrated herein, the present invention provides a battery pack comprising of a plurality of cells. A protective circuit for a battery pack is disclosed. The protective circuit includes a plurality of switches that are connected in parallel with the battery pack. The plurality of switches may be controlled by a motor control unit (MCU) and, at least one fusing unit is connected to the plurality of switches in series. The motor control unit (MCU) is configured to actuate the fusing unit based on detection of a state of operation of any or a combination of the plurality of switches.

According to yet another aspect, a method for protecting a battery pack from unintentional current flows is disclosed. The method comprises detecting, by a motor control unit (MCU), a state of operation of a plurality of switches provided on a battery management system (BMS) within the battery pack. The method further includes, measuring by the MCU, a current value within the protective circuit and on the measured current value being 0, subsequently measuring an output voltage difference across the BMS and a load connected to said battery pack such that on the measured output voltage difference being greater than or lesser than 0, checking the state of operation of the plurality of switches. The MCU then actuates a fusing unit when one of the plurality of switches are in the failure state of operation.

Yet another aspect discloses a battery pack comprising a plurality of cells forming said battery pack, a battery management system that is electrically connected to the battery pack. The battery pack further includes a protective circuit connected to the battery pack. The protective circuit comprises a plurality of switches connected in parallel with said battery pack and at least one fusing unit that is connected in series with the plurality of switches.

### BRIEF DESCRIPTION OF THE DRAWINGS

The present invention will become more fully understood from the detailed description given herein below and the accompanying drawings which are given by way of illustration only, and thus are not limitative of the present invention, and wherein
**Figure 1** illustrates a block diagram of the battery pack, in accordance with some embodiments of the present disclosure.
**Figure 2** illustrates a circuit diagram of the protective circuit for the battery pack, in accordance with some embodiments of the present disclosure.
**Figure 3** illustrates a control flow chart of the protective circuit, in accordance with some embodiments of the present disclosure.
**Figure 4** illustrates a flow chart of the steps involved as per the method of protecting the battery from unintentional currents, in accordance with an embodiment of the present disclosure.
**Figure** 5 illustrates a flow chart of the steps involved as per the method of protecting the battery from unintentional currents, in accordance with another embodiment of the present disclosure.

### DETAILED DESCRIPTION

The present disclosure may be best understood with reference to the detailed figures and description set forth herein. Various embodiments are discussed below with reference to the figures. However, those skilled in the art will readily appreciate that the detailed descriptions given herein with respect to the figures are simply for explanatory purposes as the methods and systems may extend beyond the described embodiments. For example, the teachings presented and the needs of a particular application may yield multiple alternative and suitable approaches to implement the functionality of any detail described herein. Therefore, any approach may extend beyond the particular implementation choices in the following embodiments described and shown.

References to "one embodiment," "at least one embodiment," "an embodiment," "one example," "an example," "for example," and so on indicate that the embodiment(s) or example(s) may include a particular feature, structure, characteristic, property, element, or limitation but that not every embodiment or example necessarily includes that particular feature, structure, characteristic, property, element, or limitation. Further, repeated use of the phrase "in an embodiment" does not necessarily refer to the same embodiment.

The present invention now will be described more fully hereinafter with different embodiments. This invention may, however, be embodied in many different forms and should not be construed as limited to the embodiments set forth herein; rather those embodiments are provided so that this disclosure will be thorough and complete, and fully convey the scope of the invention to those skilled in the art.

The present invention is illustrated with a battery pack. However, a person skilled in the art would appreciate that the present invention is not limited to a battery pack and certain features, aspects and advantages of embodiments of the present invention can be used with other types and forms of energy storage devices or energy storage packs used in conjunction with various types of vehicles such as electric vehicle and plug-in hybrid vehicles as well as other electrical equipment and external electrical loads using a rechargeable energy storage pack. In an embodiment, the electric vehicles, hybrid vehicle, electrical equipment, external electrical load draw electric current from the energy storage pack.

It is an object of the present subject matter to provide a battery pack comprising of a protective circuit that protects the battery pack from unintended and stray currents within the battery pack circuit. To this end, the present subject matter discloses a protective circuit within the battery pack. The protective circuit is disposed between the battery pack and the load. The protective circuit is comprised of at least two switches that are connected in parallel with the battery pack and at least one fusing unit. In an embodiment, the fusing unit is a pyrofuse.

It is known in the art, to provide a battery management system (hereinafter referred to as BMS) for assessing and monitoring the state of health and state of charge of the plurality of cells of the battery pack. Any malfunction of a cell of the battery pack may lead to dumping of current on the malfunctioning cell which would lead to rise in temperature of the battery pack. Further, any malfunction may give rise to stray currents that may eventually lead to a discharge of the battery pack. The BMS configured to monitor the state of health and state of charge of the battery pack detects the abnormal rise in temperature or stray currents and cuts-off or ceases the entire functionality of the battery pack in pursuit of avoidance of thermal runaway in the battery pack. The evident drawback of the existing approaches to prevent stray currents as illustrated above results in a requirement to completely change the wiring of the battery pack and re-install the wiring, the fuse and the switches and in certain instances a complete re-installation of the battery pack.

The disclosed subject matter addresses this exact drawback of the known art by providing a simpler, easy to use, motor control unit (MCU) based actuation of the fuse that eliminates the requirement for replacing the entire battery pack and the wirings in the event of a fuse blowing up.

It is known in the art to provide additional electrical fuses connected to printed circuit boards (hereinafter referred to as PCBs) in connection with the battery pack to isolate the malfunctioning battery pack. However, the disclosed configuration known in the art results in an excessive increase in the number of components associated with the battery pack and the corresponding weight of the battery pack. Further, addition of extra components such as electrical fuses connected to PCBs increases the manufacturing and assembly time of the battery pack as well as the cost associated with the battery pack. The configuration of the known art further apprehensively impacts the serviceability, maintainability, and accessibility of the components of the battery pack as already known in the prior art.

Further, the disclosed subject matter enables modified versions of existing battery packs with minimal changes in the battery pack design with a minor inclusion of the protective circuit that is actuated by a control unit or a motor control unit, electrical connections in the battery pack and even the manufacturing set-up without major revamping of the core manufacturing process.

In accordance with the configuration of the disclosed subject matter, an additional advantage of the disclosed battery pack is the flexibility to manufacture variants in forms of size of the battery pack, range of power supply and capacity of the battery pack.

Further embodiments of the present invention may include varying numbers of switches with at least one fuse that are controlled by a controller installed within the BMS.

The embodiments of the present invention will now be described in detail with reference to a battery pack along with the accompanying drawings. However, the present invention is not limited to the present embodiments. The present subject matter is further described with reference to accompanying figures. It should be noted that the description and figures merely illustrate principles of the present subject matter. Various arrangements may be devised that, although not explicitly described or shown herein, encompass the principles of the present subject matter. Moreover, all statements herein reciting principles, aspects, and examples of the present subject matter, as well as specific examples thereof, are intended to encompass equivalents thereof.

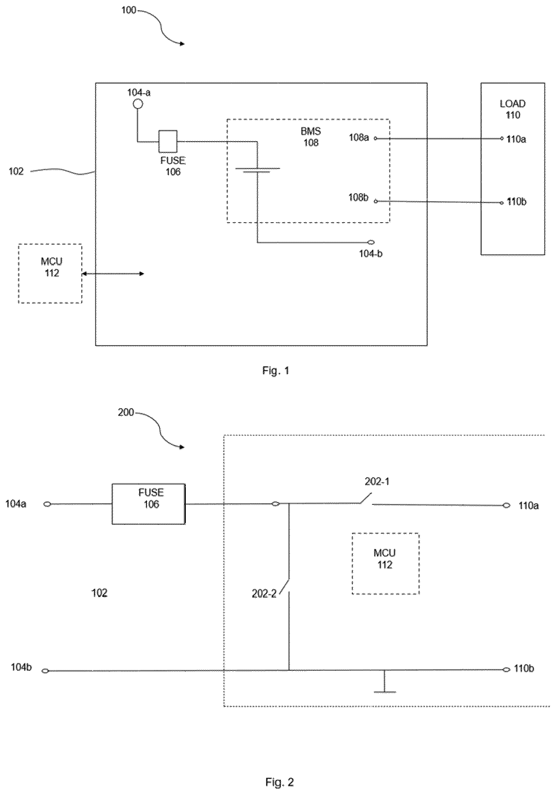

**Figure 1** illustrates a block diagram 100 of the battery pack, in accordance with some embodiments of the present disclosure. Referring now to Figure 1, battery pack 102 is comprised of a battery management system (hereinafter referred to as BMS throughout this document) 108. The battery pack 102 includes the circuit that generally comprises of a switch and a fuse 106. 104-a and 104-b are the terminals of the battery pack 102 that are inputs to the BMS 108. The output current from the BMS is input to the Load 110, through BMS outlets 108-a and 108-b that transmit the current to the load 110 through the load terminals 110-a and 110-b. In an embodiment, the fuse 106 may be non-resettable. The Fuse 106 may be provided be on the negative side of the battery pack 102 circuit as well as the positive side of the battery pack. The motor control unit (hereinafter referred to as MCU throughout this document) 112 monitors operative state of the switches across the circuit and actuates the fuse 106.

In an aspect, a protective circuit for a battery pack is disclosed. The protective circuit comprises a plurality of switches 202-1, 202-2 that are connected in parallel with the battery pack 102. The plurality of switches 202-1, 202-2 are controlled by a motor control unit (MCU) 112 and one fusing unit 106 is connected in series with the plurality of switches 202-1, 202-2. The MCU 112 is configured to actuate the fusing unit 106 based on a detection of a state of operation of at least one of the plurality of switches 202-1, 202-2.

In an embodiment, the system configuration includes a battery pack 102 having a plurality of cells, a BMS 108 and the protection circuit having two switches 202-1, 202-2 connected in parallel and a fuse 106 connected in series with the parallel switches. The system configuration includes a load that draws the power from the BMS. The load 110 can be a vehicle/external load drawing current from the battery pack 102.

In an embodiment, the protective circuit for the battery pack is disposed on the BMS. In an embodiment, the MCU 112 monitors the state of operation of each of the plurality of switches 202-1, 202-2. The state of operation of each switch may be ON or failure. A load 110 may be connected to the output of the battery pack. Flow of current to the load 110 is regulated by the BMS 108.

In an embodiment, the protective circuit is connected to the battery pack 102 and is positioned before the BMS 108. Based on detection of state of operation of each of the plurality of switches 202-1, 202-2, the motor control unit 112 is configured to measure a current value within the protective circuit and when the measured current value is 0, the MCU subsequently measures an output voltage difference across the BMS 108 and the load 110 that is connected to the battery pack 102. On the measured output voltage difference being greater than or lesser than 0, the MCU 112 checks the state of operation of the plurality of switches 202-1, 202-2 and actuates the fusing unit 106 if one of the switches 202-1, 202-2 is in the failure state of operation.

In an embodiment, the MCU 112 is configured to check the state of operation of the plurality of switches 202-1, 202-2 when the measured current value is greater than or lesser than 0 and actuates the fusing unit 106 when one of the plurality of switches 202-1, 202-2 is in the failure state of operation.

In yet another embodiment, on the detection of the state of operation of any of said plurality of switches 202-1, 202-2 as failure, the fusing unit 106 is adapted to actuate off responsive to actuation by the MCU 112.

In an embodiment, the fusing unit 106 provided within the protective circuit for the battery pack 102 is a pyrofuse unit. The plurality of switches 202-1, 202-2 are actuated responsive to an input received from the MCU 112. The input by the MCU 112 is generated in response to the state of operation of plurality of switches 202-1, 202-2.

The battery pack 102 can operate when a user input of ignition or charging is provided and even when no inputs are provided.

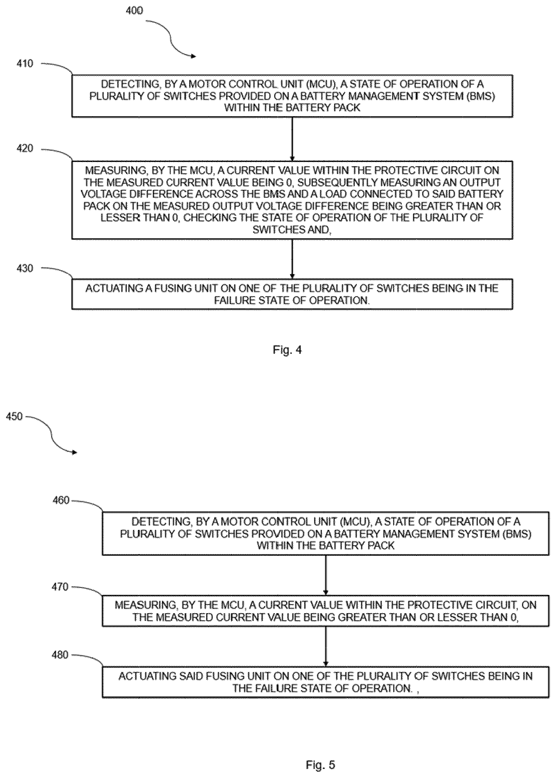

**Figure 2** illustrates a circuit diagram of the protective circuit for the battery pack 102, in accordance with some embodiments of the present disclosure. With reference to figure 4 of the battery pack 102 equipped with the protection circuit. 104a is connected to 110a through switch 202-1 and a separate branch with switch 202-2 is placed across the circuit in series with fuse 106. The switches 202-1, 202-2, are controlled by the BMS 108. In an embodiment, the switches 202-1, 202-2 may be actuated by the MCU 112.

In an embodiment, when control over one of the switches is lost, the control signal is directed to the second switch, allowing the entire battery pack 102 to discharge through the second switch and the fuse 106. In an embodiment, actuation of the switching units may be done based on user inputs such as ignition and charging which is received by the MCU 112.

On shorting of one of the switches 202-1, 202-2, the MCU 112 detects a failure of the shorted switch. The MCU 112 already possesses the information about the other switch that whether the switch is open or closed.

As an illustration, on failure of switch 202-1, the operational state of 202-1 (whether ON or OFF) is detected by checking the voltage between 104a and 110a. Based on the voltage value, the MCU 112 detects the failure of the switch 202-1. Further, in the event of 202-1 being in a closed loop - no potential difference should ideally exist between 104a and 110a as current is normally flowing through switch 202-1.

Furthermore, in the event of 202-1 being in an open loop, a potential difference would exist as 110a is the voltage on the vehicle/external load side and 104a is the voltage at the pack side.

On failure of 202-1, the MCU 112 detects the information that switch 202-1 has failed and further receives information on the charging state of the battery. In the event of the battery being charged, to ensure safety, the charging of the battery pack 102 is to be stopped. To stop the charging of the battery pack, the switch 202-2 is to be controlled/operated by the BMS (MCU). With 202-2 being ON, 104a and 104b are directly shorted and a control signal to blow Fuse 106 is sent by the MCU 112. Once 202-2 is ON, the fuse 106 is subjected to high current and would ultimately blow off, thereby stopping charging from the opposite side.

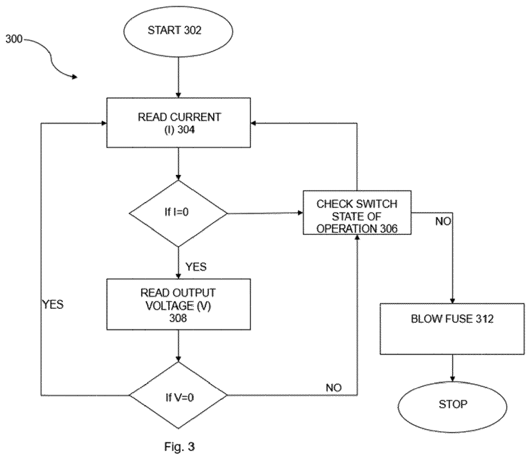

**Figure 3** illustrates a control flow chart 300 of the protective circuit, in accordance with some embodiments of the present disclosure. 'I' represents the current flowing out of switch 202-1 and BMS 108. The value of Current I=0 indicates either the switch is ON or that there is no load 110. The MCU 112 is configured to read 304 value of the current I, and on the current not being 0, subsequently check 306 the switch state of operation. If the switch is not operational, the fusing unit 106 is actuated to blow up. On the value of the current I being 0, the MCU 112 reads 308 the output voltage. The output voltage is across the terminals 110a and 110b. The Voltage value V=0 indicates the switch 202-1 is open and both current and voltage are checked for corroboration purposes. During normal operation, 202-1 takes control of the current from BMS. There is a possibility of uncontrolled currents only upon failure of switch 202-1. On failure of 202-1, a voltage is reflected at the terminal 110a and the vehicle/external load 110 continues to draw current or run because of the open state of switch 202-2.

Referring now to Figure 4 which illustrates a flow chart of the steps involved as per the method of protecting the battery from unintentional currents, in accordance with an embodiment of the present disclosure. Referring to figure 4, aspect of the present disclosure pertains to a method 400 for protecting a battery pack from unintentional current flows. The method comprises detecting 410 by a motor control unit (MCU), a state of operation of a plurality of switches provided on a battery management system (BMS) within the battery pack. The method includes measuring 420 by the MCU, a current value within a protective circuit and based on the measured current value being 0, subsequently measuring an output voltage difference across the BMS and a load connected to said battery pack such that on the measured output voltage difference being greater than or lesser than 0, checking the state of operation of the plurality of switches. Based on the switch functional status, actuating 430 by the MCU, the fusing unit when any of the plurality of switches are in a failure state of operation.

**Figure 5** illustrates a flow chart 450 of the steps involved as per the method of protecting the battery from unintentional currents, in accordance with another embodiment of the present disclosure. In an embodiment, the method further includes measuring 470, by the MCU, the current value such that on the measured current value being greater than or lesser than 0, actuating 480 the fusing unit when any of the plurality of switches are in the failure state of operation.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise. The terms "including", "comprising", "having" and variations thereof mean "including but not limited to", unless expressly specified otherwise. The terms "a", "an" and "the" mean "one or more", unless expressly specified otherwise.

The disclosed claimed limitations and the disclosure provided herein provides a battery pack 100 with a protective circuit provided therein. The claimed invention in an aspect provides enhanced safety and security in the operating environment of the battery pack 100. In an embodiment, the battery pack comprises of a plurality of switches that are in parallel to the battery pack and a fusing unit in series with the switches. The fusing element is configured to blow-off on receipt of a signal from a Motor Control Unit (MCU). The MCU is configured to actuate the blowoff of the fuse once the current passing through the battery pack circuit reaches a pre-defined threshold or once one of the switches are detected as being in the failed state.

The present invention discloses a cost-effective solution in the form of a protection circuit which addresses the drawbacks of the above-mentioned state of the art.

The present invention addresses safety concerns in the battery pack and appositely provides a protection circuit which addresses the failure mode of the switches controlled by BMS in the event of unintentional currents flowing in the battery pack.

The protection circuit comprising of a plurality of switches is operated by a control algorithm preloaded within the MCU based on the operative condition of the switches.

In light of the above-mentioned advantages and the technical advancements provided by the disclosed method and system, the claimed steps as discussed above are not routine, conventional, or well understood in the art, as the claimed steps enable the following solutions to the existing problems in conventional technologies. Further, the claimed steps clearly bring an improvement in the functioning of the device itself as the claimed steps provide a technical solution to a technical problem.

A description of an embodiment with several components in communication with another does not imply that all such components are required, On the contrary, a variety of optional components are described to illustrate the wide variety of possible embodiments of the invention,

Finally, the language used in the specification has been principally selected for readability and instructional purposes, and it may not have been selected to delineate or circumscribe the inventive subject matter and is therefore intended that the scope of the invention be limited not by this detailed description, but rather by any claims that issue on an application based here on. Accordingly, the embodiments of the present invention are intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following claims.

A person with ordinary skills in the art will appreciate that the systems, modules, and sub-modules have been illustrated and explained to serve as examples and should not be considered limiting in any manner. It will be further appreciated that the variants of the above disclosed system elements, modules, and other features and functions, or alternatives thereof, may be combined to create other different systems or applications.

Those skilled in the art will appreciate that any of the aforementioned steps and/or system modules may be suitably replaced, reordered, or removed, and additional steps and/or system modules may be inserted, depending on the needs of a particular application. In addition, the systems of the aforementioned embodiments may be implemented using a wide variety of suitable processes and system modules, and are not limited to any particular computer hardware, software, middleware, firmware, microcode, and the like. The claims can encompass embodiments for hardware and software, or a combination thereof.

While the present disclosure has been described with reference to certain embodiments, it will be understood by those skilled in the art that various changes may be made, and equivalents may be substituted without departing from the scope of the present disclosure. In addition, many modifications may be made to adapt a particular situation or material to the teachings of the present disclosure without departing from its scope. Therefore, it is intended that the present disclosure is not limited to the particular embodiment disclosed, but that the present disclosure will include all embodiments falling within the scope of the appended claims.

## Claims

1. A protective circuit (100, 200) for a battery pack (102), said protective circuit comprising:
a plurality of switches (202-1, 202-2), said plurality of switches (202-1, 202-2) being connected in parallel with said battery pack (102), wherein said plurality of switches (202-1, 202-2) being controlled by a motor control unit (MCU) (112) and wherein, at least one fusing unit (106) being connected in series with said plurality of switches (202-1, 202-2), wherein said MCU (112) being configured to:
actuate said at least one fusing unit (106) based on a detection of a state of operation of at least one of the plurality of switches (202-1, 202-2).

2. The protective circuit (100, 200) for said battery pack (102) as claimed in claim 1, wherein said protective circuit being disposed on a battery management system (BMS) (108).

3. The protective circuit (100, 200) for said battery pack (102) as claimed in claim 1, wherein said state of operation of each of said plurality of switches (202-1, 202-2) is at least one of ON or failure.

4. The protective circuit (100, 200) for said battery pack as claimed in claim 1, wherein for said detection of said state of operation of each of said plurality of switches (202-1, 202-2), said MCU (112) is configured to:
measure a current value within said protective circuit and when said measured current value being 0, subsequently measure an output voltage difference across said BMS (108) and a load (110) connected to said battery pack (102) and, on said measured output voltage difference being greater than or lesser than 0, check said state of operation of said plurality of switches (202-1, 202-2) and,
actuate said at least one fusing unit (106) on one of said plurality of switches (202-1, 202-2) being in said failure state of operation.

5. The protective circuit (100, 200) for said battery pack (102) as claimed in claim 4, wherein said MCU (112) is configured to check said state of operation of said plurality of switches (202-1, 202-2) on said measured current value being greater than or lesser than 0 and actuate said at least one fusing unit on one of said plurality of switches (202-1, 202-2) being in said failure state of operation.

6. The protective circuit (100, 200) for said battery pack (102) as claimed in claim 1, wherein on said detection of said state of operation of any of said plurality of switches (202-1, 202-2) as failure, said at least one fusing unit (106) is adapted to actuate off responsive to actuation by said MCU.

7. The protective circuit (100, 200) for said battery pack (102) as claimed in claim 1, wherein said fusing unit (106) is a pyrofuse unit.

8. The protective circuit (100, 200) for said battery pack (102) as claimed in claim 1, wherein said plurality of switches (202-1, 202-2) are actuated responsive to an input received from said MCU (112), said inputs being generated by said MCU (112) in response to said state of operation of said plurality of switches (202-1, 202-2).

9. A method (400) for protecting a battery pack from unintentional current flows, the method comprising:
detecting (410) by a motor control unit (MCU), a state of operation of a plurality of switches provided on a battery management system (BMS) within said battery pack;
measuring (420) by said MCU, a current value within a protective circuit and based on said measured current value being 0, subsequently measuring an output voltage difference across said BMS and a load connected to said battery pack such that on said measured output voltage difference being greater than or lesser than 0, checking said state of operation of said plurality of switches; and
actuating (430) by said MCU, at least one fusing unit when at least one of said plurality of switches are in a failure state of operation.

10. The method (400) for protecting said battery pack from unintentional current flow as claimed in claim 9, wherein said method comprises:
checking (460) by said MCU, said state of operation of said plurality of switches such that (470) on said measured current value being greater than or lesser than 0, actuating (480) said at least one fusing unit when at least one of said plurality of switches are in said failure state of operation.

11. The method for protecting said battery pack from unintentional current flow as claimed in claim 9, wherein said at least one fusing unit is a pyrofuse unit.

12. A battery pack (102) comprising:
a plurality of cells forming said battery pack (102);
a battery management system (108), said battery management system being electrically connected to said battery pack (102);
a protective circuit, said protective circuit being connected to said battery pack (102), and wherein said protective circuit comprises of a plurality of switches (202-1, 202-2) connected in a parallel configuration with said battery pack (102) and at least one fusing unit (106).

13. The battery pack (102) as claimed in claim 12, wherein said battery pack (102) being configured to operate in at least two modes of operation.

14. The battery pack (102) as claimed in claim 13, wherein a first mode of operation of said at least two modes of operation of said battery pack (102) being when a user input of ignition or charging is provided.

15. The battery pack (102) as claimed in claim 13, wherein a second mode of operation of said at least two modes of operation of said battery pack being when no user input of ignition or charging is provided.

16. The battery pack (102) as claimed in claim 12, wherein said at least one fusing unit (106) being connected in series configuration with said plurality of switches (202-1, 202-2) is a pyrofuse unit.
